# EUROPEAN PATENT SPECIFICATION

(11) **EP 0 449 609 B1**
(45) Date of publication and mention of the grant of the patent: **12.06.1996**
(21) Application number: 91302682.9
(22) Date of filing: 27.03.1991
(51) Int. Cl.: C08G 18/63, C08G 18/76, C08G 18/65, C08G 18/30, C08J 9/02

(54) **Process for the production of high resilience flexible polyurethane foams**
Verfahren zur Herstellung hochelastischer flexibler Polyurethanschaumstoffe
Procédé pour la préparation des mousses flexibles de polyuréthane à haute résilience

(30) Priority: 29.03.1990 GB 9007063
(43) Date of publication of application: 02.10.1991
(73) Proprietor: ARCO Chemical Technology, L.P., Greenville, Delaware 19807 (US)
(72) Inventor: Gaillard, Michel, F-60100 Creil (FR); Den Boer, Jelle, F-60580 Coye-La-Foret (FR)
(74) Representative: Cropp, John Anthony David

(56) References cited:
- EP-A- 0 073 034
- EP-A- 0 322 912
- US-A- 3 142 652
- US-A- 3 316 285

## Description

This invention relates to the production of high resilience (HR) and combustion-modified high resilience (CMHR) polyurethane flexible foams from polymer polyols and is particularly applicable to the production of slabstock foam.

In the art of making flexible polyurethane foam, it is known that by utilizing foam-forming formulations incorporating a highly reactive organic polyisocyanate and a high molecular weight polyol having a certain level of primary hydroxyl group content, a foam with improved resilience and other desirable physical properties can be accomplished. Such resulting foams have come to be referred to in the art as "high resilience" (HR) foams. Resilience is defined as the ability to return readily to original shape and dimensions after a deforming force has been applied and removed from a body. In polyurethane foam technology, the industry generally considers "Sag factor" to be the characteristic which differentiates high resilience foams from conventional foams. This Sag factor is a measure of support provided by a cushioning material and it represents the ratio of compression or indent load deflection, at 65 percent deflection to that at 25 percent deflection. According to SPI standards, conventional flexible foams exhibit a Sag factor of about 1.7 to 2.2, while high resilience foams display a factor of above about 2.2.

It is known that HR flexible polyurethane foams may be obtained using a polymer polyol as the polyol. By a polymer polyol is meant a dispersion of a polymer, preferably an addition polymer, in a high molecular weight polyol. Examples of such polymer polyols are described in USP 4104236.

A polyisocyanate which is used in the production of such foams is toluene diisocyanate (TDI) which is available as an admixture of the 2,4- and 2,6- isomers.

There is a number of publications, e.g. USPs 4239879, 4642397, 4786703 and 3554872, which relate to the separation of mixtures of 2,4-toluene diisocyanate and 2,6-toluene diisocyanate and/or the use of one or other of the pure isomers in the production of polyurethanes but none relates to the production of foam.

USP 4497913 describes the formation of stable polymer polyols for use in the production of HR foams having good load bearing and processing properties, wherein the dispersed polymer is prepared by reacting an organic polyisocyanate with a molar excess of a short chain polyol and the preferred polyisocyanate is a mixture of 2,4- and 2,6- TDI isomers in the range 60:40 to 90:10. The polyisocyanate employed in converting the polymer polyol to polyurethane in all the Examples is an 80/20 mixture of 2,4- and 2,6- TDI isomers.

USP 4104236 describes the production of polyurethane elastomers, including flexible polyurethane foams, from polymer polyols employing a polyisocyanate which may be inter alia toluene diisocyanate and a blowing agent which may be inter alia water. All the examples which employ toluene diisocyanate use an 80:20 mixture of 2,4- and 2,6-isomers.

Foams obtained from TDI exhibit useful load bearing properties as expressed by performance in indentation load deflection (ILD) and compression load deflection (CLD) tests but an improvement would be desirable in other properties, especially tensile strength and tear strength.

We have now found in accordance with the invention that an improvement in these properties is obtainable if the polyisocyanate is mainly a mixture of 2,4- and 2,6- isomers of TDI containing more than 80% of the 2,4-isomer. Such an increase without a significant loss in load bearing properties is surprising and could not have been predicted.

We have also found that by means of the invention, equivalent load bearing properties to those obtained using e.g. TDI having an 80:20 mixture of 2,4- and 2,6- isomers may be achieved using lower levels of isocyanate relative to polymer polyol (i.e. a lower isocyanate index) and/or with polymer polyols having lower solids contents, thereby offering an important saving in costs.

Thus according to the present invention, there is provided a process for the production of flexible polyurethane foams in the presence of a blowing agent wherein the polyol component includes polymer polyol and has an overall functionality greater than 2 and wherein the polyisocyanate comprises mainly toluene diisocyanate on a molar basis wherein the ratio of 2,4- isomer to 2,6- isomer is greater than 80:20.

Further valuable and unexpected benefits are obtainable from the process of this invention if the blowing agent consists wholly or mainly of water and is essentially free of chlorofluorocarbon. Using TDI with a 2,4- to 2,6- isomer ratio of 80:20 as the polyisocyanate and water as the blowing agent, HR polyurethane foams having densities as low as about 25 kg/m³ from polymer polyols have been obtained. However, attempts to produce lower density foams by using larger amounts of water has tended to result in foam collapse. For the production of such lower density foams, therefore, it has normally been necessary hitherto to use chlorofluorocarbon blowing agents, such as CFC 11. However, these are no longer environmentally acceptable.

We have now found unexpectedly that foam having a density below 25 kg/cm³ can be obtained without foam collapse using water as the sole blowing agent when the polyisocyanate is TDI wherein the ratio of 2,4- isomer to 2,6- isomer is greater than 80:20. We have also found that where water is employed as the sole blowing agent foams of equivalent load bearing properties to those obtained where a mixture of water and CFC is employed are obtainable at lower overall foam densities.

The preferred polymer polyols are those wherein the dispersed polymer comprises styrene/acrylonitrile copolymer; however any polymer polyol suitable for use in the production of HR foams may be used. Examples are polyurea dispersion polyols (sometimes known as PHD polyols) and polymer polyols sometimes known as PIPA polyols wherein the dispersed polymer is the reaction product of an excess of a low molecular weight polyol, usually an alcoholamine, with a polyisocyanate. For further details of polymer polyols that may be used, reference may be made, for example, to United States Patent No. 4,104,236.

The polyol in which the polymer is dispersed is normally a polyether polyol and will generally have a molecular weight of at least about 1500 and preferably from about 4000 to about 7000. Examples of suitable polyols are oxypropylated oxyethylated aliphatic triols having a molecular weight of about 4,500 to about 6,600.

If desired, a mixture of polymer polyols may be employed. A mixture of polymer polyol and other polyol may also be used, if desired, e.g. to reduce solids content. Examples of suitable polyols for use in admixture with the polymer polyol are those suitable for use as the high molecular weight polyols employed in the formation of the polymer polyols. Preferably, the polyol employed in admixture with the polymer polyol is of the same kind as the polyol of the polymer polyol. The primary hydroxyl group content of the total polyol reactant employed in the foam forming reaction should be at least 60 % in order to achieve an adequate level of reactivity.

In general, increasing the solids content of the total polymer reactant will increase the load bearing properties of the foam and its density. The overall solids content of the total polyol reactant will normally be in the range of up to about 35%, and preferably is from 6% to 15%, by weight, in order to obtain the desired physical properties.

The overall functionality of the total polyol reactant (i.e. polymer polyol and any additional polyol) is greater than 2 and typically will be in the range 2.5 to 3.

To obtain the desired resilience in the foam product, it is generally considered necessary to include in the foam-forming reaction mixture a low molecular weight compound having at least three reactive hydrogen atoms each attached to a nitrogen or oxygen atom, and the ability to suppress biuret formation. The preferred compounds are polyalkanolamines such as triethanolamine and, more preferably, diethanolamine. Such compound is generally included in the reaction mixture in an amount of 0.5 to 5 parts by weight based on 100 parts by weight of total polyol reactant.

In general, the improvement in tensile and tear strength appears to increase with increase in the ratio of 2,4- to 2,6- isomer in the TDI. Preferably the ratio is at least 85:15, more preferably at least 90:10. However, increase in this ratio also increases reactivity and it may also be necessary, therefore, to adjust the choice of catalyst accordingly. If desired some of the TDI may be replaced by at least one other polyisocyanate suitable for use in the production of HR foams; however, said other polyisocyanate(s) form at most only on a minor molar proportion of the total amount of polyisocyanate employed.

Increasing the amount of polyisocyanate employed relative to polyol tends to increase the load bearing properties of the foam and the foam exotherm. Decreasing the amount of polyisocyanate, on the other hand, tends to increase compression set. Normally, therefore the amount of polyisocyanate employed will be such as to provide an isocyanate index (ratio of total number of isocyanate groups provided by the polyisocyanate to total number of hydroxyl groups provided by the total polyol reactant plus the aforementioned low molecular weight compound, multiplied by 100) in the range 90 to 120, and preferably 95 to 105.

Any suitable blowing agent may be employed and examples are low boiling hydrocarbons, polyhalogenated alkanes especially chlorofluorocarbons, and water. However, as stated hereinbefore a particularly important aspect of the invention is the production of low density foam using water as essentially the sole blowing agent. In general, increasing the amount of blowing agent reduces the density of the foam and vice versa. Where water is used as, or as part of, the blowing agent, increasing the amount of water tends to increase the load bearing properties of the foam. The blowing agent may be employed in the amounts normally use in the production of HR foam. Thus, water will normally be employed in an amount of about 0.5 to 5 parts per 100 parts of total polyol, by weight and polyhalogenated alkanes will normally be employed in amounts of up to about 20 parts per 100 parts of total polyol, by weight.

The catalyst employed in preparing the foams of the invention may be any of the catalysts known to be useful for this purpose, including a tertiary amine, an organo-metallic salt, a mixture of an organo-metallic salt with one or more tertiary amines, etc. Typical tertiary amines include, for example, triethylamine, triethylene diamine, trimethylamine, tetramethylene diamine, tetramethylbutane diamine, N-methylmorpholine, N-ethylmorpholine, dimethylpiperazine, trimethylaminoethylpiperazine, dimethylcyclohexylamine, mixtures of bis (dimethylaminoethylether) and dipropylene glycol such as the 7.3 weight ratio mixture which is available commercially under the trademark "Niax A-1", methyldicyclohexylamine, N-cyclohexylmorpholine, dimethylcyclohexylamine, methyldiethanolamine, dimethylethanolamine, mixtures of dimethylcyclohexylamine and 2-(3-pentyl)-1-dimethylaminocyclohexane such as may be purchased commercially under the trademark "Polycat", bis (dimethylaminoethylpropylether), mixtures of triethylene diamine and dipropylene glycol such as the 1:2 and 1:4 weight ratio mixtures which may be purchased commercially under the trademarks "Dabco 33LV" and "Dabco 8020", respectively, bis (dimethylaminopropylether) and mixtures of these catalysts. The preferred tertiary amine catalysts are triethylene diamine, mixtures of triethylene diamine with dipropylene glycol, mixtures of bis (dimethylaminoethylether) and di-propylene glycol, dimethylcyclohexylamine alone or as a mixture thereof with 2-(3-pentyl)-1-dimethylaminocyclohexane.

Typical organo-metallic salts include, for example, the salts of tin, mercury, titanium, antimony, aluminium, cobalt, zinc, bismuth, lead and cadmium, the tin salts i.e. stannic and stannous salts, being preferred. Illustratively, such salts include the octoates, dilaurates, diacetates, dioctoates, oleates, and neodeconates of these metals, the octoates being preferred.

The tertiary amine and organo metallic salt catalysts may be employed in the amounts normally used for the production of HR foams; that is, 0.1 to 0.5 part per 100 parts by weight of total polyol reactant (as defined above) for tertiary amine catalysts and 0.1 to 0.4 part per 100 parts of total polyol reactant by weight, for organo metallic salt catalysts.

Other additives conventionally employed in the production of HR foams may be included, if desired. Examples are fillers to lower cost and/or improve physical properties; dyes for color; fibrous materials such as glass fibre for added strength; plasticizers, deodorants, antioxidants, surfactants, flame retardants and foam stabilisers.

Preferred flame retardants are melamine, and halophosphate flame retardants, e.g. tetrakis (2-chloroethyl) ethylene diphosphate, trischloropropyl phosphate and trischloroethyl phosphate. To form CMHR foams, it is preferred to use a combination of melamine and a halophosphate flame retardant.

Preferred foam stabilisers are silicone and siloxane oxyalkylene block copolymers such as described in United States Patent Nos 2,834,748, 2,917,480 and 3,505,377 and British patent 1,220,471.

The foams obtained by the process of the invention are characterised by improved tensile and tear strength at equivalent load bearing properties.

Also, by means of the invention, foam having densities below 25 kg/m³ may be obtained without the use of chlorofluorocarbon blowing agents.

The invention is now illustrated in the following Examples.

### Examples 1-5

Slabstock foams were obtained from a series of formulations identified in Table 1. The properties of the foams were measured using standard test procedures and are recorded in Table 2.

Example 1 is given for the purposes of comparison.

ARCOL 1255 and ARCOL 1254 are both polymer polyols comprising a dispersion of styrene/acrylonitrile copolymer in a high molecular weight polyoxypropylated polyoxyethylated triol having an average molecular weight of 4800 and 74% primary hydroxyl groups. In 1255, the solids content is 15% and the OH value of the polyol is 30 mg KOH/g. In 1254, the solids content is 6% and the OH value of the polyol is 33 mg KOH/g.

ARCOL 1264 is a polyoxypropylated polyoxyethylated triol having a molecular weight of 4800 and 74% primary hydroxyl groups.

DMEA is N,N-dimethylethanolamine.

DEOA 85% is an 85% by weight solution of diethanolamine in water.

Silicone SH 207 and 209 are surfactants.

TDI means toluene diisocyanate. The ratio following the letters "TDI" is the ratio of 2,4-isomer to 2,6- isomer.

Thermolin 101 is tetrakis (2-chloroethyl) ethylene diphosphate.

TCPP is trischloropropyl phosphate.

DBTDL is dibutyltindilaurate.

Kosmos 29 is stannous octoate.

**TABLE 1**

| Examples | 1 | 2 | 3 | 4 | 5 |
|---|---|---|---|---|---|
| ARCOL 1255 | 100 | | 100 | 66 | |
| ARCOL 1264 | | | | 34 | |
| ARCOL 1254 | | 100 | | | 100 |
| Water | 2,8 | 4,2 | 4,2 | 4,2 | 4,2 |
| Niax A1 (catalyst) | 0,06 | 0,05 | 0,05 | 0,05 | 0,05 |
| Tego Amin 33 (catalyst) | 0,18 | | | | |
| DMEA (catalyst) | | 0,18 | 0,18 | 0,18 | 0,18 |
| Silicone SH 209 | 0,80 | 0,80 | 0,80 | 0,80 | 0,80 |
| DEOA 85% | 2,0 | 1,20 | 1,20 | 1,0 | 1,20 |
| Glycerine | 1,0 | | | | |
| Fluorocarbon 11 | 12 | | | | |
| Kosmos 29 (catalyst) | 0,15 | 0,11 | 0,15 | 0,16 | 0,13 |
| TDI 95:5 | | 44,30 | 48,80 | 48,50 | 49,20 |
| TDI 80:20 | 42,5 | | | | |
| Index | 105 | 90 | 100 | 100 | 100 |

**TABLE 2**

| Example | 1 | 2 | 3 | 4 | 5 | STANDARD |
|---|---|---|---|---|---|---|
| Rise Time(s) | 130 | 125 | 100 | 87 | 95 | |
| Density (kg/m3) | 21,6 | 21,4 | 21,4 | 21,2 | 20,8 | |
| ILD (Kg) at 25% | 2,9 | 3,1 | 6,7 | 5,2 | 3,8 | ISO 2439 |
| (e=5cm) at 40% | 4,1 | 4,3 | 8,9 | 6,8 | 5,2 | ASTM 3574 |
| at 65% | 9,0 | 8,4 | 17,6 | 13,0 | 10,3 | |
| Return at 40% | 3,5 | 3,6 | 7,3 | 5,5 | 4,4 | |
| ILD40%/Density | 0,19 | 0,20 | 0,42 | 0,32 | 0,25 | |
| Hyster.ILD40% (e=5cm) | 15% | 16% | 18% | 19% | 15% | |
| CLD (kPa) at 25% | 0,70 | 0,85 | 1,65 | 1,45 | 1,05 | NFT 56114 |
| at 40% | 0,95 | 1,10 | 2,05 | 1,80 | 1,40 | DIN 53577 |
| at 50% | 1,20 | 1,40 | 2,55 | 2,20 | 1,70 | |
| at 65% | 2,15 | 2,45 | 4,25 | 3,85 | 3,05 | |
| Return at 50% | 0,90 | 1,00 | 1,70 | 1,45 | 1,15 | |
| Return at 40% | 0,70 | 0,75 | 1,35 | 1,15 | 0,90 | |
| CLD40%/Density | 0,04 | 0,05 | 0,10 | 0,08 | 0,07 | |
| Hyster, CLD40% | 26% | 32% | 34% | 36% | 36% | |
| SAG FACTOR (CLD) | 3,07 | 2,88 | 2,57 | 2,65 | 2,90 | |

| Dynamic Fatigue Test | | | | | | |
|---|---|---|---|---|---|---|
| % Height Loss After 30mn | 4,20 | 6,10 | 4,60 | 5,50 | 6,80 | |
| % Height Loss After 24H | 1,8 | 2,45 | 2,2 | 2,02 | 3,40 | |
| %CLD Loss After 24H | 9,5 | 18 | 15,5 | 15,5 | 16,40 | |
| Tensile (kPa) | 83 | 105 | 123 | 120 | 123 | ISO 1798 |
| Elongation % | 144 | 270 | 174 | 230 | 243 | DIN 53571 |
| Tear Cis. N/cm | 4,60 | 7,8 | 7,10 | 8,5 | 8,6 | DIN 53515 |
| Tear Pan. N/cm | 2,50 | 2,8 | 3,80 | 3,2 | 3,0 | ASTM 3574 |
| C.Set at 70% | 21 | 26 | 12 | 22 | 22 | NFT 56112 |
| C.Set at 75% | | 44 | | 18,5 | 25 | BS 4443 |
| Humid C.Set 40°C 70% | 90 | 100 | 100 | 100 | 100 | RENAULT 1637 |

Comparison of Example 2 with Example 1 shows that when TDI with an isomer ratio in accordance with the invention (ratio of 2,4- to 2,6-isomer is 95:5) is used in place of the commonly used material having a ratio of 80:20 the resiliant foam of not significantly different density and load bearing properties, as measured by ILD and CLD at 40%, exhibits substantially increased tear strength and tensile strength even though both the solids contents of the polymer polyol and the isocyanate index are substantially reduced. Furthermore, a foam density of significantly below 25 Kg/m³ is obtained without using chlorofluorocarbon blowing agent. In Example 1, it was necessary to include glycerine to achieve the necessary foam stability and to increase the amount of DEOA.

DMEA is used as catalyst in Example 2 instead of Tego Amin 33.

Examples 3 to 5 demonstrate the effect on physical properties of varying the solids content of the polyol component and the isocyanate index.

When Example 1 was repeated but using 4.2 parts of water as the blowing agent and no fluorocarbon 11, the foam collapsed.

### Examples 6 and 7

Two further experiments were carried out to determine the effect of varying the ratio of 2,4- isomer to 2,6- isomer in the TDI.

The foam-forming formulations are reported in Table 3 and the physical properties of the slabstock foams obtained are reported in Table 4

**TABLE 3**

| Examples | 6 | 7 |
|---|---|---|
| ARCOL 1255 | | |
| ARCOL 1254 | 100 | 100 |
| Water | 4,20 | 4,20 |
| Niax A1 | 0,05 | 0,05 |
| DMEA | 0,18 | 0,18 |
| Silicone SH 207 | 0,80 | 0,80 |
| DEOA 85% | 1,20 | 1,20 |
| Kosmos 29 | 0,16 | 0,14 |
| TDI 85/15 | 45,10 | |
| TDI 90/10 | | 45,10 |
| Index | 90 | 90 |

**TABLE 4**

| Examples | 6 | 7 | STANDARD |
|---|---|---|---|
| Rise Time (sec) | 95 | 110 | |
| Density (kg/m3) | 21 | 21,3 | |
| ILD (Kg) at 25% | 4.1 | 3.8 | ISO 2439 |
| (e x 5cm)at 40% | 5,5 | 5 | ASTM 3574 |
| at 65% | 11,1 | 10 | |
| Return at 40% | 4,4 | 4,1 | |
| ILD40%/Density | 0,26 | 0,23 | |
| Hyster.ILD 40% | 20% | 18% | |
| CLD (KPa) at 25% | 1,20 | 1,14 | |
| at 40% | 1,48 | 1,40 | NFT 56114 |
| at 50% | 1,82 | 1,72 | |
| at 65% | 3,01 | 2,79 | |
| Return at 50% | 1,24 | 1,20 | |
| Return at 40% | 0,99 | 0,96 | |
| CLD 40%/Density | 0,07 | 0,07 | |
| Hyster.CLD 40% | 33,1% | 31,4% | |
| Sag Factor (CLD) | 2,51 | 2,45 | |
| Tensile (KPa) | 119 | 94 | ISO 1798 |
| Elongation (%) | 259 | 270 | DIN 53571 |
| Tear Cis.N/cm | 7,80 | 6,90 | DIN 53515 |
| Tear Pan. N/cm | 4,60 | 3,90 | ASTM 3574 |
| C.Set at 70% 70°C | 18,5 | 25 | NET 56112 |
| C.Set at 75% 70°C | 100 | 100 | BS 4443 |
| Humid C.Set at 70% 40°C | 90 | 95 | RENAULT 1637 |

Comparison of Example 6 with Examples 7 and 2 demonstrates the decrease in load bearing properties that is achieved with increase in ratio of 2,4-TDI to 2,6-TDI, thus enabling the increase in hardness that is normally obtained when water is used as blowing agent to be offset.

### Examples 8-10

Set out in Tables 5 and 6 are examples of CMHR foam-forming formulations in accordance with the invention and the properties of the slabstock foams so obtained.

### Examples 11 - 14

These are further examples of combustion-modified HR foam-forming formulations. Details of the formulations are given in Table 7 and properties of the slabstock foams so obtained are reported in Table 8. Example 11 is provided for comparison.

**TABLE 5**

| Example | 8 | 9 | 10 |
|---|---|---|---|
| ARCOL 1254 | 100 | 100 | 100 |
| Melamine | 25 | 25 | 25 |
| Water | 4,33 | 4,33 | 4,33 |
| Niax A1 | 0,02 | 0,02 | 0,02 |
| DMEA | 0,13 | 0,13 | 0,13 |
| Silicone SH 209 | 0,80 | 0,80 | 0,80 |
| DEOA (85%) | 1,80 | 1,80 | 1,80 |
| Thermolin 101 | 2 | 2 | 2 |
| TCPP | 2 | 2 | 2 |
| Kosmos 29 | 0,22 | 0,20 | 0,18 |
| TDI 95:5 | 47,90 | 53,20 | 53,20 |
| Index | 90 | 100 | 100 |

**TABLE 6**

| Examples | 8 | 9 | 10 | STANDARD |
|---|---|---|---|---|
| Top | 24,2 | 22,7 | 23,3 | |
| Density (kg/m3) Middle | 24,0 | 22,7 | 22,8 | |
| Bottom | 24,8 | 24,2 | 23,2 | |
| ILD (kg) at 25% | 3,5 | 4,2 | 5,2 | |
| (e=5cm) at 40% | 5,1 | 6,2 | 7,3 | ISO 2439 |
| at 65% | 11,6 | 14,1 | 15,3 | ASTM 3574 |
| Return at 40% | 4,1 | 4,9 | 5,7 | |
| ILD 40%/Density | 0,21 | 0,27 | 0,32 | |
| Hyster.ILD 40% | 20% | 21% | 22% | |
| CLD (kPa) at 25% | 0,92 | 1,07 | 1,14 | |
| at 40% | 1,26 | 1,45 | 1,55 | |
| at 50% | 1,64 | 1,90 | 2,00 | NFT 56114 |
| at 65% | 3,05 | 3,51 | 3,58 | |
| Return at 50% | 1,07 | 1,16 | 1,24 | |
| Return at 40% | 0,80 | 0,85 | 0,91 | |
| CLD 405/Density | 0,05 | 0,06 | 0,07 | |
| Hyster.CLD 40% | 37% | 41% | 41% | |
| Sag Factor (CLD) | 3,31 | 3,28 | 3,14 | |

| Dynamic Fatigue Test | | | | |
|---|---|---|---|---|
| % Height Loss After 30mn | 6,0 | 6,8 | 5,7 | |
| % Height Loss After 24H | 1,1 | 1,1 | 1,1 | |
| % CLD Loss After 24H | 14,0 | 20,5 | 16,3 | |
| Tensile (kPa) | 49 | 51 | 58 | ISO 1798 |
| Elongation (%) | 89 | 78 | 81 | DIN 53571 |
| Tear Cis. N/cm | 3,10 | 3,20 | 3,30 | DIN 53515 |
| Tear Pan. N/cm | 1,20 | 1,40 | 1,40 | ASTM 3574 |
| C.Set at 70% 70°C | 70 | 80 | 60 | NFT 56112 |
| C.Set at 75% 70°C | 100 | 100 | 56 | BS 4443 |
| C.Set at 50% 70°C | 32 | 23 | 18 | BS 4443 |
| Humid C.Set 70% 40°C | 100 | 100 | 100 | RENAULT 1637 |
| Weight Loss/g : <60g | 28 | 30 | 33 | BS 5852 |
| | | | | Part2 Crib 5 |

**TABLE 7**

| EXAMPLE | 11 | 12 | 13 | 14 |
|---|---|---|---|---|
| ARCOL 1255 | 100 | 66 | | |
| ARCOL 1264 | | 34 | | |
| ARCOL 1254 | | | 100 | 100 |
| Melamine | 30 | 25 | 25 | 25 |
| Water | 3,60 | 4,38 | 4,38 | 4,38 |
| Niax A1 | 0,06 | 0,02 | 0,02 | 0,02 |
| Tego Amin 33 | 0,22 | | | |
| DMEA | | 0,15 | 0,13 | 0,13 |
| Silicone SH 209 | 0,80 | 0,80 | 0,80 | 0,80 |
| Silicone SH 214 | | | | |
| DEOA 85% | 2,0 | 1,50 | 1,50 | 1,50 |
| Thermolin 101 | 5 | 5 | 4 | 4 |
| Fluorocarbon 11 | 15 | | | |
| Kosmos 29 | | 0,22 | 0,17 | 0,16 |
| DBTDL | 0,06 | | | |
| TDI 95:5 | | 51,6 | 51,80 | 46,60 |
| TDI 80:20 | 47,7 | | | |
| Index | 105 | 100 | 100 | 90 |

**TABLE 8**

| Example | 11 | 12 | 13 | 14 | STANDARD |
|---|---|---|---|---|---|
| Rise-Time(s) | 135 | 130 | 150 | 140 | |
| Density (Kg/m3) | 23,2 | 25,0 | 24,5 | 25,4 | |
| ILD(Kg) at 25% | 6,0 | 8,9 | 6,6 | 5,5 | ISO 2439 |
| (e=5cm) at 40% | 8,0 | 11,9 | 9,0 | 7,6 | ASTM 3574 |
| at 65% | 16,0 | 23,4 | 18,7 | 15,9 | |
| Return at 40% | 6,4 | 9,4 | 7,2 | 6,2 | |
| ILD40%/Density | 0,34 | 0,48 | 0,37 | 0,30 | |
| Hyster.ILD40% (e=5cm) | 20% | 21% | 20% | 8% | |
| CLD (kPa) at 25% | 1,45 | 2,20 | 1,95 | 1,60 | |
| at 40% | 1,90 | 2,70 | 2,45 | 2,05 | NFT 56114 |
| at 50% | 2,40 | 3,35 | 3,15 | 2,60 | |
| at 65% | 4,20 | 5,60 | 5,60 | 4,75 | |
| Return at 50% | 1,55 | 2,10 | 2,00 | 1,70 | |
| Return at 40% | 1,20 | 1,60 | 1,50 | 1,35 | |
| CLD40%/Density | 0,08 | 0,11 | 0,10 | 0,08 | |
| Hyster.CLD40% | 37% | 41% | 39% | 34% | |
| SAG FACTOR (CLD) | 2,90 | 2,54 | 2,87 | 2,97 | |

| Dynamic Fatigue Test | | | | | |
|---|---|---|---|---|---|
| % Height Loss after 30 mn | 5,0 | 3,90 | 5,60 | 5,03 | |
| % Height Loss After 24 H | 2,5 | 1,60 | 2,40 | 2,00 | |
| %CLD Loss After 24 H | 17 | 15 | 21 | 17,5 | |
| Tensile (kPa) | 58 | 74 | 71 | 66 | ISO 1798 |
| Elongation % | 88 | 96 | 100 | 112 | DIN 53571 |
| Tear Cis. N/cm | 3,30 | 5,05 | 4,45 | 4,30 | DIN 53515 |
| Tear Pan. N/cm | 1,40 | 2,30 | 1,90 | 1,80 | ASTM 3574 |
| C.Set at 70% | 18 | 18 | 15 | 19 | NFT 56112 |
| C.Set at 75% | | | 10 | 23 | BS 4443 |
| Humid C.Set 40°C 70% | 80 | 68 | | | |
| BS 5852 < 60g | 50 | 63 | 77 | 58 | |
| EXOTHERM °C | 120 | 137 | 13 | 135 | |

Comparison of Example 14 with Example 11 illustrates how comparable properties are obtained with reduced solids content and reduced isocyanate when the ratio of 2,4-TDI to 2,6-TDI is increased above 80:20.

## Claims

1. A process for the production of flexible polyurethane foam in the presence of a blowing agent characterised in that the polyol component includes polymer polyol and has an overall functionality greater than 2, the polyisocyanate comprises mainly toluene diisocyanate on a molar basis and the ratio of 2,4-isomer to 2,6-isomer of said toluene diisocyanate is greater than 80:20.

2. A process as claimed in claim 1 wherein the blowing agent employed in the foam-forming formulation comprises water.

3. A process as claimed in claim 1 or claim 2 wherein the blowing agent is essentially free from chlorofluorocarbon.

4. A process as claimed in any one of claims 1 to 3 wherein the ratio of 2,4-isomer to 2,6-isomer of the toluene diisocyanate is at least 85:15.

5. A process for the production of flexible polyurethane foam having a density of less than about 25 kg/m³ characterised in that the polyol component includes polymer polyol and has an overall functionality greater than 2, the polyisocyanate comprises mainly toluene diisocyanate, the ratio of 2,4-isomer to 2,6-isomer of said toluene diisocyanate is greater than 80:20, and the blowing agent comprises water and is essentially free of chlorofluorocarbon.

## Patentansprüche

1. Verfahren zur Herstellung flexibler Polyurethanschaumstoffe in Anwesenheit eines Treibmittels, dadurch gekennzeichnet, daß die Polyolkomponente ein polymeres Polyol umfaßt und eine Gesamtfunktionalität oberhalb von 2 aufweist, das Polyisocyanat auf molarer Basis hauptsächlich Toluoldiisocyanat ist und das Molverhältnis des 2,4-Isomeren zum 2,6-Isomeren des Toluoldiisocyanats oberhalb von 80 : 20 liegt.

2. Verfahren gemäß Anspruch 1, bei dem das in der schaumbildenden Zubereitung verwendete Treibmittel Wasser enthält.

3. Verfahren gemäß Anspruch 1 oder 2, bei dem das Treibmittel im wesentlichen frei von Fluorchlorkohlenwasserstoffen ist.

4. Verfahren gemäß einem der Ansprüche 1 bis 3, bei dem das Verhältnis des 2,4-Isomeren zum 2,6-Isomeren des Toluoldiisocyanats mindestens 85 : 15 beträgt.

5. Verfahren zur Herstellung eines flexiblen Polyurethanschaumstoffs mit einer Dichte unterhalb 25 kg/m³, dadurch gekennzeichnet, daß die Polyolkomponente ein polymeres Polyol umfaßt und eine Gesamtfunktionalität oberhalb von 2 aufweist, das Polyisocyanat hauptsächlich Toluoldiisocyanat ist, wobei das Verhältnis des 2,4-Isomeren zum 2,6-Isomeren des Toluoldiisocyanats oberhalb 80 : 20 liegt, und das Treibmittel Wasser enthält und im wesentlichen frei von Fluorchlorkohlenwasserstoffen ist.

## Revendications

1. Procédé pour la production de mousse flexible de polyuréthane en présence d'un agent moussant, caractérisé en ce que le composant polyol comprend un polymère polyol et a une fonctionnalité globale supérieure à 2, le polyisocyanate comprend principalement du toluène diisocyanate sur une base molaire et le rapport de l'isomère 2,4 à l'isomère 2,6 de ce toluène diisocyanate est supérieur à 80:20.

2. Procédé suivant la revendication 1, dans lequel l'agent moussant employé dans la formulation formant une mousse comprend de l'eau.

3. Procédé suivant les revendications 1 et 2, dans lequel l'agent moussant est essentiellement exempt de chlorofluorocarbure.

4. Procédé suivant l'une quelconque des revendications 1 à 3, dans lequel le rapport de l'isomère 2,4 à l'isomère 2,6 du toluène diisocyanate est d'au moins 85:15.

5. Procédé pour la production de mousse flexible de polyuréthane ayant un poids spécifique inférieur à environ 25 kg/m³, caractérisé en ce que le composant polyol comprend un polymère polyol et a une fonctionnalité globale supérieure à 2, le polyisocyanate comprend principalement du toluène diisocyanate, le rapport de l'isomère 2,4 à l'isomère 2,6 de ce toluène diisocyanate est supérieur à 80:20 et l'agent moussant comprend de l'eau et est essentiellement exempt de chlorofluorocarbure.
